# EUROPÄISCHE PATENTSCHRIFT

(11) **EP 3 566 068 B1**
(45) Veröffentlichungstag und Bekanntmachung des Hinweises auf die Patenterteilung: **21.06.2023**
(21) Anmeldenummer: 17832462.0
(22) Anmeldetag: 08.12.2017
(51) Int. Cl.: G01S 5/18, G01S 5/26, G01S 11/14, G05D 1/02

(54) **ELEKTRONISCHES KOPPLUNGSSYSTEM**
ELECTRONIC COUPLING SYSTEM
SYSTÈME DE COUPLAGE ÉLÉCTRONIQUE

(30) Priorität: 09.01.2017 DE 102017000077
(43) Veröffentlichungstag der Anmeldung: 13.11.2019
(73) Patentinhaber: EurA AG, 73479 Ellwangen (DE)
(72) Erfinder: EIFERT, Harald, 73479 Ellwangen (DE)
(74) Vertreter: Weihrauch, Frank
(86) Internationale Anmeldenummer: PCT/DE2017/000415
(87) Internationale Veröffentlichungsnummer: WO 2018/127253

(56) Entgegenhaltungen:
- EP-A1- 0 991 046
- WO-A1-2015/137426
- DE-A1-102014 106 835
- GB-A- 2 283 838
- US-A1- 2013 268 185

## Beschreibung

Die Erfindung betrifft ein elektronisches Kopplungssystem, mittels welchem eine aktive Fahreinheit ankoppelbar ist.

Herkömmliche Kopplungssysteme sind überwiegend als mechanische Kopplungssysteme ausgebildet, mittels welchen eine aktive Fahreinheit, beispielweise ein Fahrzeug, mit einer passiven Fahreinheit, beispielsweise einem Anhänger, verbunden wird, so dass die passive Fahreinheit der aktiven Fahreinheit in einem definierten Abstand folgt. Diesbezüglich sind unter anderem verschiedene Arten von Deichseln und Anhängerkupplungen bekannt.

Zur Bereitstellung einer elektronischen Kopplung ist es hingegen notwendig, das nachfolgende Folgeobjekt als aktive Fahreinheit auszubilden, welche über einen eigenen Antrieb und eine eigene Lenkung verfügt. Somit bestehen erhöhte technische Anforderungen, da insbesondere eine geeignete Sensorik zur Ermittlung der Lagebeziehung zwischen Führungs- und Folgeeinheit bereitgestellt werden muss. Die gewonnenen Daten müssen zudem auf geeignete Weise weiterverarbeitet werden und in Fahrbewegungen des Folgeobjekts umsetzbar sein.

Aus dem Stand der Technik sind für verschiedenartige Anwendungsfälle von elektronischen Kopplungssystemen bereits Lösungsvorschläge bekannt.

So wird in der Druckschrift DE 102 24 939 A1 ein drahtlos steuerbarer Triebachs-Anhänger sowie ein Leitfahrzeug für den Einsatz in der Landwirtschaft beschrieben, wobei der Anhänger an das Leitfahrzeug elektronisch ankoppelbar ist. Der Triebachs-Anhänger weist einen eigenen Antrieb sowie zumindest eine Empfangseinheit für Geopositionskoordinaten, welche mit einer Steuerungseinheit des Anhängers verbunden ist, auf. Die Empfangseinheit ist für den Empfang von Signalen eines Satellitenpositionsbestimmungssystems ausgelegt.

Die Druckschrift DE 10 2013 221 261 A1 offenbart als weitere Variante einer elektronischen Kopplung einen insbesondere elektrisch angetriebenen Golf-trolley mit einem mobilen RFID (radio-frequency identification) - Radar zur Positionsbestimmung. Somit soll ein autonomes Fahren des Golftrolleys ermöglicht werden. An dem Trolley sind zwei voneinander beabstandete RFID-Empfänger befestigt. Darüber hinaus weist der Trolley eine Verarbeitungseinheit auf, welche zur Bestimmung der Abstände des ersten und zweiten RFID-Empfängers zu einem RFID-Tag genutzt wird. Auf Basis dieser beiden Abstände sowie des bekannten Abstandes der RFID-Empfänger zueinander ist zudem die Position des RFID-Tags in Bezug auf den Trolley bestimmbar.

Ferner ist aus der Druckschrift DE 10 2008 026 686 A1 ein Verfahren sowie eine Vorrichtung zur simultanen Steuerung der Beschleunigung einer Gruppe von Kraftfahrzeugen bekannt. Die Fahrzeuge führen jeweils einen Computer mit sich, welche zu einem virtuellen Computercluster verbunden sind. Der Computercluster umfasst zudem ein Steuerungsprogramm, welches von jedem der Fahrzeuge Fahrzeugkenngrößen wie die Leistungsfähigkeit von Bremse und Antrieb sowie die absolute Position des Fahrzeugs, den Abstand zum vorherfahrenden Fahrzeug und die Geschwindigkeit in Betrag und Richtung erhält. Insgesamt setzt diese Lösung daher eine umfangreiche Datengrundlage voraus und stellt zudem hohe Anforderungen an die Ausstattung der Fahrzeuge.

Durch US 2013 / 268 185 A1 wird ein Verfahren und eine Vorrichtung zur automatischen Positionierung von mehreren Fahrzeugen beschrieben. Es handelt sich hierbei um eine ultraschallbasierte Vorrichtung. Gemäß der hier beschriebenen Lösung weist jedes Fahrzeug mindestens vier Ultraschallsensoren und mindestens einen Ultraschallsender auf. Durch Auswertung der empfangenden Ultraschallsignale mittels eines Computers erfolgt eine Berechnung der Ultraschallwellenlaufzeiten und hierauf aufbauend der relativen Postion eines Folgefahrzeugs zu einem Leitfahrzeug. Nachteilig ist der Aufwand durch die hohe Anzahl von Ultraschallsensoren.

Weiterhin beschreibt DE 10 2014 106 835 A1 eine Vorrichtung und eine Verfahren zur Objektverfolgung, mittels eines Ultraschallsensors und zweier Infrarotsensoren.

Aus EP 0 991 046 A1 ist ein elektronisches System für die Nachführung automatisierter Fahrzeuge bekannt. Nach dieser Lösung kommuniziert ein Führungsfahrzeug über eine Funkverbindung mit den Folgefahrzeugen und fragt beispielsweise deren Geschwindigkeit ab. Die Folgefahrzeuge verwenden einen Laserradar, der Reflektoren an dem Vorderfahrzeug erfasst und so die Entfernung bestimmt. Bei einer Fehlerkennung kann das Folgefahrzeug das Führungsfahrzeug über die Funkverbindung benachrichtigen.

GB 2 283 838 A beschreibt einen automatischen Golf-Trolley, der automatisch einer Fernsteuerung folgt. Der Golf-Trolley weist mehrere multidirektional arbeitenden Ultraschallsensoren und -quellen auf und ermittels hiermit laufzeitbezogen die Entfernung zur Fernbedienung. Über einen Elektroantrieb kann der Golf-Trolley seine Ausrichtung und Postition eigenständig ändern, wenn die Fernbedienung aus einem definierbaren Bereich bewegt wird.

Ferner beschreibt WO 2015/137 426 A1 eine Vorrichtung und ein Verfahren zur Bestimmung einer Relativposition von zwei gleichartigen Vorrichtungen mittels mehrerer Ultraschallwandler durch eine Triangulation.

Nachteilig bei den vorgenannten Lösungen ist beispielsweise das Erfordernis zusätzlicher Kommunikationswege wie Funk oder Infrarot.

Die Aufgabe der Erfindung ist es, ein elektronisches Kopplungssystem bereitzustellen, mittels welchem eine Fahreinheit ankoppelbar ist, welches für zahlreiche Anwendungsbereiche geeignet ist und welches zudem eine geringe Störanfälligkeit aufweist sowie kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Ein erfindungsgemäßes elektronisches Kopplungssystem, mittels dessen eine Fahreinheit ankoppelbar ist, weist eine Sendeeinheit, eine Empfangseinheit, eine Auswertungseinheit sowie eine Antriebseinheit auf.

Die Sendeeinheit weist einen ersten und einen zweiten Sender auf, welche als Ultraschallsender ausgebildet sind und zueinander einen definierten Senderabstand aufweisen. Von dem ersten Sender ist zu einem ersten Sendezeitpunkt ein erstes Ultraschallsignal aussendbar, während von dem zweiten Sender zu einem zweiten Sendezeitpunkt ein zweites Ultraschallsignal aussendbar ist. Die beiden Ultraschallsignale weisen dabei eine voneinander abweichende Frequenz auf.

Die beiden Ultraschallsignale weisen bevorzugt gemäß der üblichen Definition eine Frequenz oberhalb von 16 kHz, insbesondere oberhalb von 20 kHz, auf.

Die Empfangseinheit weist einen ersten und einen zweiten Empfänger auf, welche zueinander einen definierten Empfängerabstand aufweisen. Von dem ersten Sender ist das erste und das zweite Ultraschallsignal empfangbar. Ebenso ist auch von dem zweiten Sender das erste und zweite Ultraschallsignal empfangbar. Somit sind von beiden Empfängern jeweils beide Ultraschallsignale als insgesamt vier Signalempfänge empfangbar. Die vier Signalempfänge beschreiben dabei zeitlich bestimmbare Empfangsereignisse. Der Zeitpunkt der Signalempfänge wird durch den jeweiligen Zeitpunkt der Absendung des betreffenden Ultraschallsignals und durch die Laufzeit des Ultraschallsignals bestimmt, wobei die Laufzeit bei feststehender Schallgeschwindigkeit durch den räumlichen Abstand zwischen dem sendenden Sender und dem empfangenden Empfänger bestimmt wird.

Ein erster Signalempfang ist erfindungsgemäß einer ersten Signalstrecke zwischen dem ersten Sender und dem ersten Empfänger zugeordnet. Ein zweiter Signalempfang ist einer zweiten Signalstrecke zwischen dem ersten Sender und dem zweiten Empfänger zugeordnet. Ein dritter Signalempfang ist einer dritten Signalstrecke zwischen dem zweiten Sender und dem ersten Empfänger zugeordnet. Letztlich ist ein vierter Signalempfang einer vierten Signalstrecke zwischen dem zweiten Sender und dem zweiten Empfänger zugeordnet.

Die Erfindung ist so zu verstehen, dass mindestens zwei Sender und genau zwei Empfänger vorhanden sind. Es können zusätzlich aber auch ein dritter Sender oder weitere Sender vorgesehen werden, so dass dann weitere Signalstrecken und weitere Signalempfänge zur Auswertung zur Verfügung stehen. Dies kann zur Erhöhung der Genauigkeit oder für sicherheiterhöhende redundante Bestimmungen der Ist-Relativposition verwandt werden.

Die Auswertungseinheit ist mit der Empfangseinheit datenverbunden. Die Art der Datenverbindung ist dabei nicht auf eine spezielle Ausgestaltung beschränkt und kann drahtgebunden oder drahtlos vorliegen. Vorzugsweise sind die Empfangseinheit und die Auswertungseinheit baulich zusammengefasst. Mittels der Auswertungseinheit ist jedem der vier Signalempfänge ein Empfangszeitpunkt zuordenbar. Darüber hinaus ist das erste und zweite Ultraschallsignal von der Auswertungseinheit anhand der voneinander abweichenden Frequenzen der beiden Ultraschallsignale dem ersten und dem zweiten Sender zuordenbar.

Auf Grundlage dessen ist eine Differenz der Empfangszeitpunte des ersten und des zweiten Signals im ersten Empfänger sowie eine Differenz der Empfangszeitpunkte des ersten und des zweiten Signals im zweiten Empfänger von der Auswertungseinheit bestimmbar. Da zudem die Differenz der Sendezeitpunkte in der Auswertungseinheit hinterlegbar ist, kann unter Berücksichtigung der Differenz der Empfangszeitpunkte und der Differenz der Sendezeitpunkte die Differenz der Laufzeiten und damit die Differenz der Signalstrecken ermittelt werden.

Es liegt somit eine Information über die Differenz der Länge der Signalstrecken vor. Die unmittelbare laufzeitbasierte Bestimmung einer absoluten Länge der Signalstrecken ist dagegen erfindungsgemäß nicht erforderlich.

Da der Senderabstand sowie der Empfängerabstand bekannt sind, können diese Abstandsdaten gemeinsam mit der Differenz der Signalstrecken von der Auswertungseinheit zur Bestimmung einer Ist-Relativposition zwischen der Sendeeinheit und der Empfangseinheit genutzt werden. Die erfindungsgemäße Bestimmung der Ist-Relativposition basiert dabei auf einer trigonometrischen Berechnung, da sich zwischen zwei Sendern und einem Empfänger sowie zwischen einem Sender und zwei Empfängern jeweils Dreiecke aufspannen von denen mit dem Senderabstand sowie dem Empfängerabstand die absolute Länge jeweils einer Seite sowie das Längenverhältnis der anderen Seiten bekannt ist. Zudem weisen die Dreiecke untereinander mehrere gemeinsame Eckpunkte auf.

Die Ist-Relativposition, welche hierbei die relative Lagebeziehung der Sendeeinheit und der Empfangseinheit beschreibt, wird insbesondere aus einem Ist-Abstand, einem Ist-Winkel sowie einem Ist-Versatz gebildet.

In der Auswertungseinheit ist zudem eine Soll-Relativposition zwischen der Sendeeinheit und der Empfangseinheit hinterlegbar. Die Soll-Relativposition ist vorzugsweise an die jeweilige Anwendungssituation des elektronischen Kopplungssystems anpassbar, indem für diese verschiedene Soll-Werte, insbesondere ein Soll-Abstand, ein Soll-Winkel und ein Soll-Versatz vorgebbar sind. Somit kann beispielsweise eine Anpassung an die erwartete Geschwindigkeit einer Fahrbewegung vorgenommen werden, indem der geforderte Soll-Abstand erhöht oder verringert wird.

Aus einem Vergleich der vorliegenden Ist-Relativposition und der Soll-Relativposition ist von der Auswertungseinheit ein Steuerungsbefehl bereitstellbar.

Von der Antriebseinheit, welche den Steuerungsbefehl von der Auswertungseinheit erhält, ist auf Grundlage des Steuerungsbefehls eine Fahrbewegung der Fahreinheit bewirkbar. Eine Fahrbewegung kann auch einen Lenkvorgang umfassen. Mittels der Fahrbewegung ist die Soll-Relativposition zwischen Sende- und Empfangseinheit herstellbar. Die Antriebseinheit sowie vorzugsweise auch die Auswertungseinheit ist daher an der Fahreinheit angeordnet oder in der Fahreinheit integriert.

Zudem ist auch die Empfangseinheit vorzugsweise an der Fahreinheit angeordnet oder in der Fahreinheit integriert, während die Sendeeinheit einer Bewegungsvorgabeeinheit zugeordnet ist. Bei der Bewegungsvorgabeeinheit kann es sich insbesondere um ein Automobil, ein Kraftrad, ein Fahrrad oder um eine Person handeln.

Es ist auch möglich, die Sendeeinheit an der Fahreinheit und die Empfangeinheit an der Bewegungsvorgabeeinheit anzuordnen, wobei bei einer solchen Ausführung dann die Signalempfänge an die an der Fahreinheit angeordnete Auswertungseinheit, vorzugsweise drahtlos, übertragen werden müssen. Ferner wäre es möglich, auch die Auswertungseinheit der Bewegungsvorgabeeinheit zuzuordnen. Bei dieser Ausführung wären dann die Steuerungsbefehle an die Antriebseinheit, auch hier vorzugsweise drahtlos, zu übertragen.

Der Vergleich der Ist- und der Soll-Relativposition ist dabei als fortlaufender Prozess zu verstehen, aus welchem fortlaufend neue Steuerungsbefehle generiert werden. Für den Fall, dass aus dem Vergleich keine Abweichungen ermittelt wurden, wird jedoch kein neuer Steuerungsbefehl an die Antriebseinheit übertragen, so dass die momentan ausgeführte Fahrbewegung beibehalten wird. Nachdem erneut eine Abweichung auftritt, wird basierend auf einem veränderten Steuerungsbefehl die Ist-Relativposition wiederum an die vorgegebene Soll-Relativposition angepasst.

Sämtliche in der Auswertungs- und Steuerungseinheit stattfindenden Prozesse werden erfindungsgemäß in ausreichend kurzen Zeitintervallen durchgeführt, um eine konstante, an den Bewegungsablauf der Sendeeinheit angepasste Fahrbewegung der Fahreinheit zu ermöglichen.

Das erfindungsgemäße elektrische Kopplungssystem weist insbesondere die nachfolgenden Vorteile auf.

Ein erster Vorteil besteht hinsichtlich der vielfältigen Verwendungsmöglichkeiten des elektronischen Kopplungssystems. Je nach Einsatz der Sendeeinheit ist die Fahreinheit beispielsweise an ein Automobil, Kraftrad oder Fahrrad ankoppelbar. Zudem besteht die Möglichkeit, die Fahreinheit mittels eines Handbetriebs von einer Person zu führen, wobei die Sendeeinheit der Person zugeordnet ist. Somit kann die Fahreinheit für verschiedene Geschwindigkeitsbereiche und Transportkapazitäten verwendet werden.

Des Weiteren besteht ein Vorteil in der geringen Störanfälligkeit des elektronischen Kopplungssystems. Aufgrund der bekannten, voneinander verschiedenen Frequenzen des ersten und zweiten Ultraschallsignals kann von der Auswertungseinheit stets eine exakte Zuordnung der empfangenen Ultraschallsignale zu dem ersten und zweiten Sender vorgenommen werden.

Es ist zudem vorteilhaft, dass die Sendeeinheit ausschließlich Signale sendet und die Empfangseinheit ausschließlich Signale empfängt. Diese direkte, unidirektionale Kommunikation zwischen Sendeeinheit und Empfangseinheit trägt zusätzlich zu einer geringen Störanfälligkeit bei. Zudem ergibt sich neben einer technologischen Vereinfachung und einer Kosteneinsparungen auch eine erhöhte Verarbeitungsgeschwindigkeit innerhalb des elektronischen Kopplungssystems. Insbesondere ist es erfindungsgemäß nicht erforderlich, nach der Aussendung des Ultraschallsignals den Empfang eines reflektierten Signal-Echos abzuwarten, bevor die weitere Signalverarbeitung erfolgen kann.

Ferner besteht ein Vorteil darin, dass die Absolutpositionen der Sende- und Empfangseinheit im Raum erfindungsgemäß nicht bekannt sein müssen. Als Basis für die Steuerungsbefehle sowie die daraufhin erzeugten Fahrbewegungen ist lediglich die Ermittlung einer Ist-Relativpostion erforderlich. Ebenso ist keine unmittelbare Messung der absoluten Längen der vier Signalstrecken erforderlich, um die Ist-Relativposition zu bestimmen.

Nach einer bevorzugten Weiterbildung der Erfindung ist die Differenz der Sendezeitpunkte gleich 0. Der erste und zweite Sender senden somit das erste und zweite Ultraschallsignal zum gleichen Zeitpunkt aus.

Bei der Ermittlung der Differenz der Signalstrecken ist somit lediglich die Differenz der Empfangszeitpunkte zu berücksichtigen. Die Berechnung der Ist-Relativposition kann somit einfacher erfolgen und von der Auswertungseinheit innerhalb eines kürzeren Zeitraums durchgeführt werden.

Gemäß einer weiteren bevorzugten Ausgestaltung weist das elektronische Kopplungssystem zusätzlich eine Eingabeeinheit auf, welche mit der Auswertungseinheit datenverbunden ist. Mittels der Eingabeeinheit ist zwischen einem Kopplungszustand und einem Entkopplungszustand umschaltbar.

Vorzugsweise ist die Eingabeeinheit als mobiles Gerät ausgebildet, welches von einer Person tragbar ist oder in einem Automobil, Kraftrad oder Fahrrad mitführbar ist.

Der Kopplungszustand beschreibt hierbei einen Zustand, bei welchem die Empfangseinheit, und somit die Fahreinheit, der Sendeeinheit unter Einhaltung der Soll-Relativposition folgt. Im Entkopplungszustand findet hingegen keine Fahrbewegung der Fahreinheit statt, so dass diese der Sendeeinheit nicht folgt.

In einer weiteren vorteilhaften Weiterbildung sind bei einem Umschalten von dem Entkopplungszustand in den Kopplungszustand von der Auswertungseinheit Steuerungsbefehle ausgebbar, auf deren Grundlage von der Antriebseinheit eine Fahrbewegung der Fahreinheit bewirkbar ist. Mittels der Fahrbewegung ist die Soll-Relativposition zwischen Sendeeinheit und Empfangseinheit herstellbar.

Diese Weiterbildung betrifft insbesondere die Ankopplungsphase, also die Phase der Inbetriebnahme des elektronischen Kopplungssystems zu Beginn einer Fahrt. Es wird somit ermöglicht, dass sich die Fahreinheit anfänglich in die vorgegebene Soll-Relativposition bewegt. Die Bewegungsvorgabeeinheit befindet sich währenddessen vorzugsweise im Stillstand.

Vorzugsweise werden die Steuerungsbefehle gemäß dieser Weiterbildung so bewirkt, dass die Fahreinheit besonders langsame Fahrbewegungen ausführt, um Gefährdungen zu vermeiden. Weiterhin erfolgt bevorzugt zugleich eine Erfassung ein Abweichungsgrad der Ist-Relativposition von der Soll-Relativposition; bei Überscheitung eines vorbestimmbaren Wertes werden keine Steuerungsbefehle ausgegeben, um ein Fahrbewegungen in einem zu langen Ankopplungsweg wegen der möglichen Gefährdungen zu verhindern.

Nach einer weiteren vorteilhaften Ausgestaltung des elektronischen Kopplungssystems ist mittels der Auswertungseinheit eine Geschwindigkeitsüberwachung der Fahreinheit durchführbar. Bei Überschreitung einer vorbestimmbaren Maximalgeschwindigkeit ist zudem ein Warnsignal ausgebbar. Das Warnsignal kann dabei als optisches und/oder akustisches Warnsignal vorliegen.

Die Maximalgeschwindigkeit wird insbesondere anhand der Kenngrößen der Fahreinheit wie beispielsweise Gewicht, Größe und Ladekapazität gewählt. Wird diese überschritten, so kann dies anhand des Warnsignals dem Fahrer angezeigt werden, so dass dieser die zur Reduzierung der Geschwindigkeit des Automobils, Kraftrads oder Fahrrads veranlasst wird, um eine potentielle Gefahrensituation zu vermeiden.

Mittels der Auswertungseinheit ist gemäß einer nächsten bevorzugten Weiterbildung ein Abweichungsgrad der Ist-Relativposition von der Soll-Relativposition ermittelbar. Bei Überschreitung eines vorbestimmbaren Maximalabweichungsgrads ist zudem ein Warnsignal ausgebbar. Das Warnsignal kann auch hierbei als optisches und/oder akustisches Warnsignal vorliegen.

Eine Überschreitung des Maximalabweichungsgrads kann beispielsweise vorliegen, indem der Ist-Abstand zwischen Sendeeinheit und Empfangseinheit von dem definierten Soll-Abstand zu stark abweicht. Anhand des Warnsignals wird der Fahrer somit informiert, dass die Fahreinheit zu nah auf das Automobil, Kraftrad oder Fahrrad auffährt oder sich von diesem zu weit entfernt. Ebenso ist auch bei einer zu starken Abweichung des Ist-Winkels, des Ist-Versatzes oder einer Kombinationen der Ist-Größen das Warnsignal ausgebbar.

Nach einer weiteren vorteilhaften Ausgestaltung der Erfindung ist mittels der Auswertungseinheit ein Identifikationssignal auswertbar. Das Identifikationssignal überträgt einen Code, der von der Auswertungseinheit mit einem gemäß dieser Weiterbildung hinterlegten Code verglichen wird. In Abhängigkeit der festgestellten Übereinstimmung ist zwischen einem Aktivierungszustand und einem Deaktivierungszustand umschaltbar.

Im Aktivierungszustand sind sämtliche zuvor beschriebene Funktionen des elektronischen Kopplungssystems nutzbar, während die Fahreinheit in dem Deaktivierungszustand nicht ankoppelbar ist. Somit ist insbesondere eine Diebstahlschutzfunktion realisierbar, da die Fahreinheit im Falle eines negativen Auswertungsergebnisses des Identifikationssignals im Deaktivierungszustand verbleibt. Vorzugsweise wird im Deaktivierungszustand von der Auswertungseinheit zudem ein Steuerungsbefehl ausgegeben, mit der die Antriebseinheit mechanisch verriegelt wird.

Das Identifikationssignal ist gemäß einer weiterführenden, bevorzugten Ausgestaltung von der Sendeeinheit aussendbar. Die Aussendung erfolgt dabei als Modulation des ersten und/oder zweiten Ultraschallsignals. Somit kann die ohnehin erfolgende Aussendung der Ultraschallsignale zur Übertragung einer zusätzlichen Information in Form des Identifikationssignals genutzt werden.

In einer weiteren vorteilhaften Weiterbildung ist mittels der Auswertungseinheit eine Laufzeit mindestens eines Ultraschallsignals für mindestens eine Signalstrecke erfassbar und mittels der Laufzeit eine Absolutlänge der mindestens einen Signalstrecke ermittelbar und mittels der Absolutlänge die Ist-Relativposition redundant ermittelbar und mit der anhand der Differenz der Signalstrecken, des Senderabstands und des Empfängerabstands zwischen der Sendeeinheit und der Empfangseinheit ermittelten Ist-Relativposition vergleichbar.

Als besonderer Vorteil dieser Weiterbildung kann aus dem so gewonnenen Vergleich der Berechnungsergebnisse der Ist-Relativposition bei Überschreitung von vorher festlegbaren Toleranzen eine etwaige Fehlfunktion frühzeitig erkannt und beispielsweise ein Warnsignal ausgegeben werden.

Die Erfassung der Laufzeit kann beispielsweise dadurch ermöglicht werden, dass mittels Modulation dem Ultraschallsignal eine Information über den Absendezeitpunkt als Zeitstempel zufügbar ist. Die Auswertungseinheit ermittelt dann aus der Differenz des Empfangszeitpunkts bei der Empfangseinheit und dem Absendezeitpunkt gemäß dem Zeitstempel die Laufzeit und somit aus der bekannten Schallgeschwindigkeit die Absolutlänge. Ferner kann die Erfassung der Laufzeit auch dadurch ermöglicht werden, dass der Zeitgeber der Sendeeinheit und der Zeitgeber der Empfangseinheit synchonisiert werden, vorzugsweise indem Sendeeinheit und Empfangseinheit in eine definiert Lageposition zueinander gebracht werden und dann beide Zeitgeber initial synchronisiert werden. Die definierte Lagepostion von Sendeeinheit und Empfangseinheit kann insbesondere vorzugsweise durch eine mechanische Steckvorrichtung sichergestellt werden. Ist die Synchronisierung erfolgt, werden Sendeeinheit und Empfangseinheit bestimmungsgemäß wieder mechanisch entkoppelt. Je nach Genauigkeit der Zeitgeber wird die Synchronisierung vor jedem Einsatz oder auch lediglich in längeren Intervallen durchgeführt. Bei der Lösungsvariante mit synchronisierten Zeitgeber erfolgt dann von der Sendeeinheit die Signalabsendung zu einem festen Zeitabstand, beispielsweise jede 1/10 Sekunde.

Die Erfindung wird als Ausführungsbeispiel anhand von
- Fig. 1: Prinzipdarstellung des elektronischen Kopplungssystems,
- Fig. 2a: Prinzipdarstellung der Sendeeinheit und der Empfangseinheit mit zusätzlicher Kennzeichnung der geometrischen Größen,
- Fig. 2b: Prinzipdarstellung der Sendeeinheit und der Empfangseinheit mit zusätzlicher Kennzeichnung der geometrischen Größen,
- Fig. 2c: Prinzipdarstellung der Sendeeinheit und der Empfangseinheit mit zusätzlicher Kennzeichnung der geometrischen Größen,
- Fig. 3: Prinzipdarstellung des elektronischen Kopplungssystems in einer erweiterten Ausführungsform,
näher erläutert.

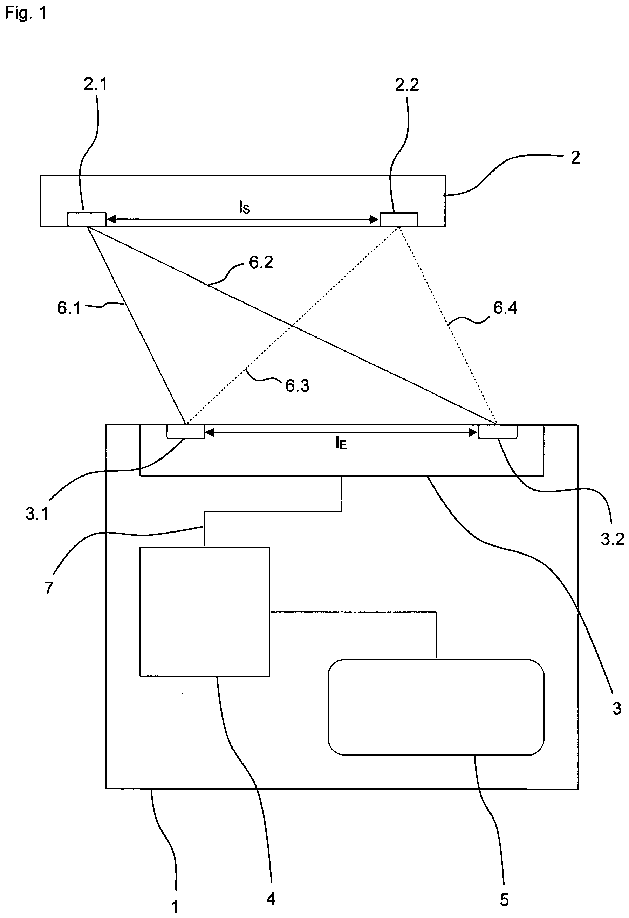

Fig. 1 zeigt eine Prinzipdarstellung eines Ausführungsbeispiels des erfindungsgemäßen elektronischen Kopplungssystems, mittels dessen eine Fahreinheit ankoppelbar ist. Gemäß dem vorliegenden Ausführungsbeispiel liegt die Fahreinheit 1 als Anhänger vor, wobei die Empfangseinheit 3, die Auswertungseinheit 4 sowie die Antriebseinheit 5 innerhalb der Fahreinheit 1 angeordnet sind. Die Sendeeinheit 2 ist hierbei einer nicht näher dargestellten Bewegungsvorgabeeinheit zugeordnet, bei welchem es sich vorzugsweise um ein Automobil, ein Kraftrad, ein Fahrrad oder um eine Person handelt.

Die Sendeeinheit 2 weist einen ersten und einen zweiten Sender 2.1 und 2.2 mit einem bekannten Senderabstand I_{S} auf. Von dem ersten Sender 2.1 ist ein erstes Ultraschallsignal und von dem zweiten Sender 2.2 ein zweites Ultraschallsignal aussendbar, wobei die beiden Ultraschallsignale verschiedene Frequenzen aufweisen. Die Sendezeitpunkte des ersten und zweiten Ultraschallsignals stimmen hierbei überein, so dass die Differenz der Sendezeitpunkte gleich null ist.

Die Empfangseinheit 3 weist einen ersten und einen zweiten Empfänger 3.1 und 3.2 mit einem bekannten Empfängerabstand I_{E} auf. Von den beiden Empfängern 3.1 und 3.2 sind jeweils beide Ultraschallsignale als ingesamt vier Signalempfänge empfangbar. Der erste Signalempfang ist dabei der ersten Signalstrecke 6.1 zwischen dem ersten Sender 2.1 und dem ersten Empfänger 3.1 zugeordnet. Der zweite Signalempfang ist einer zweiten Signalstrecke 6.2 zwischen dem ersten Sender 2.1 und dem zweiten Empfänger 3.2 zugeordnet. Der dritte Signalempfang ist einer dritten Signalstrecke 6.3 zwischen dem zweiten Sender 2.2 und dem ersten Empfänger 3.1 zugeordnet. Und der vierte Signalempfang ist einer vierten Signalstrecke 6.4 zwischen dem zweiten Sender 2.2 und dem zweiten Empfänger 3.2 zugeordnet.

Zwischen der Empfangseinheit 3 und der Auswertungseinheit 4 liegt hierbei eine Datenverbindung 7 vor, welche drahtlos oder drahtgebunden ausgebildet sein kann. Die von der Empfangseinheit 3 registrierten Signalempfänge sind somit an die Auswertungseinheit 4 übertragbar und dort weiterverarbeitbar. Mittels der Auswertungseinheit 4 ist dabei zunächst jedem der vier Signalempfänge ein Empfangszeitpunkt zuordenbar. Zudem sind die beiden Ultraschallsignale anhand ihrer Frequenzen einem der beiden Sender 2.1 und 2.2 zuordenbar.

Somit ist mittels der Auswertungseinheit 4 die Differenz der Empfangszeitpunkte des ersten und des zweiten Ultraschallsignals im ersten Empfänger 3.1 sowie die Differenz der Empfangszeitpunkte des ersten und des zweiten Ultraschallsignals im zweiten Empfänger 3.2 bestimmbar. Basierend auf der Differenz der Empfangszeitpunkte sowie unter Berücksichtigung der Differenz der Sendezeitpunkte, welche vorliegend jedoch gleich null ist, sind die Differenzen der Signalstrecken ermittelbar. Die Differenzen der Signalstrecken liegen hierbei als relative Größenverhältnisse vor, welche gemeinsame mit dem Senderabstand Is sowie dem Empfängerabstand I_{E} zur Bestimmung der Ist-Relativposition zwischen der Sendeeinheit 2 und der Empfangseinheit 3 nutzbar sind.

Da zudem eine Soll-Relativposition zwischen der Sendeeinheit 2 und der Empfangseinheit 3 in der Auswertungseinheit 4 hinterlegbar ist, kann ein Vergleich zwischen Ist- und Soll-Relativpostion erfolgen, aus welchem ein Steuerungsbefehl resultiert.

Der Steuerungsbefehl ist von der Auswertungseinheit 4 an die Antriebseinheit 5 übertragbar bereitstellbar. Von der Antriebseinheit 5 ist der Steuerungsbefehl anschließend in eine Fahrbewegung der Fahreinheit umsetzbar, wobei mittels der Fahrbewegung die vorgegebene Soll-Relativposition zwischen Sendeeinheit 2 und Empfangseinheit 3, und somit zwischen Sendeeinheit 2 und Fahreinheit 1, herstellbar ist.

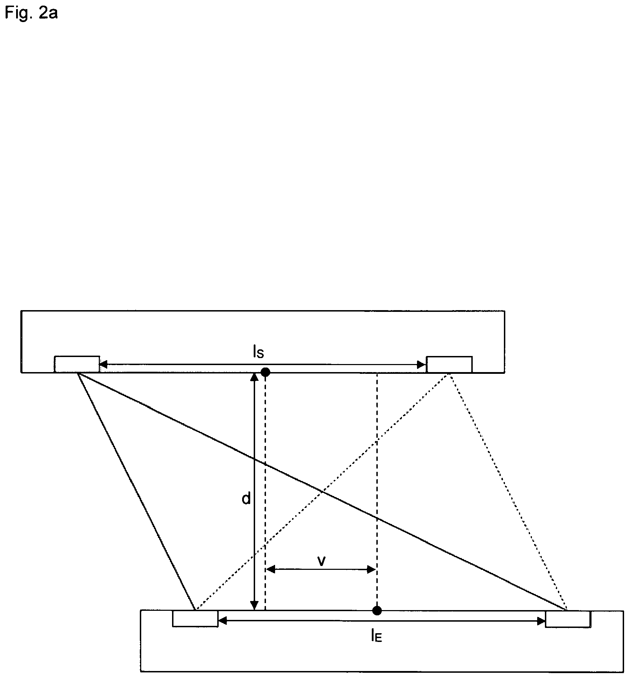

Fig. 2a zeigt ein Ausführungsbeispiel, bei welchem die Ist-Relativposition zwischen der Sendeeinheit 2 und der Empfangseinheit 3 durch einem Ist-Abstand d sowie einen Ist-Versatz v gekennzeichnet ist. Die Sende- und Empfangseinheit 2 und 3 sind hierbei parallel zueinander ausgerichtet, sie sind jedoch um den Ist-Versatz v gegeneinander verschoben.

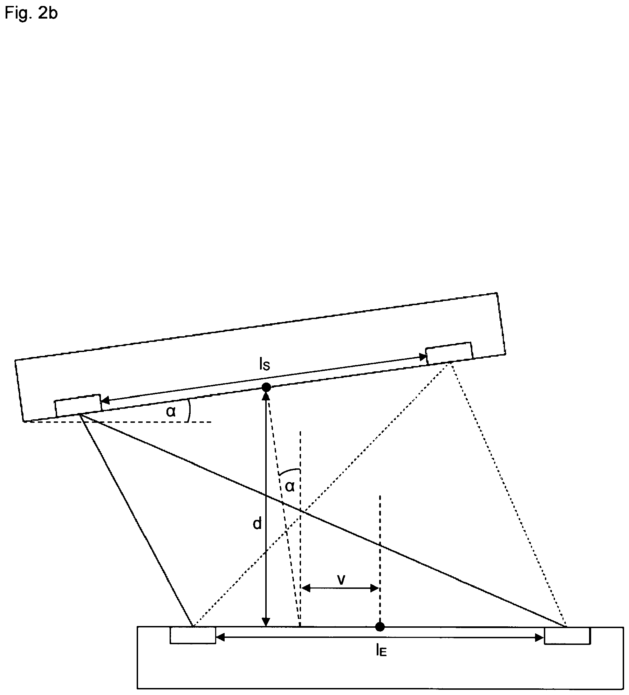

Fig. 2b zeigt ein weiteres Ausführungsbeispiel, bei welchem die Ist-Relativposition zusätzlich zu dem Ist-Abstand d und dem Ist-Versatz v auch aus einem Ist-Winkel α gebildet wird. Die Sende- und Empfangseinheit 2 und 3 sind daher nicht parallel zueinander angeordnet und zudem gegeneinander verschoben.

Wird im vorliegenden Ausführungsbeispiel die Annahme zugrunde gelegt, dass in der geforderten Soll-Relativposition sowohl der Soll-Versatz als auch der Soll-Winkel gleich null ist, so ist die von der Auswertungseinheit ermittelte, aktuelle Ist-Relativposition mittels der Steuerungsbefehle und der daraus abgeleiteten Fahrbewegung in die Soll-Relativposition zu überführen.

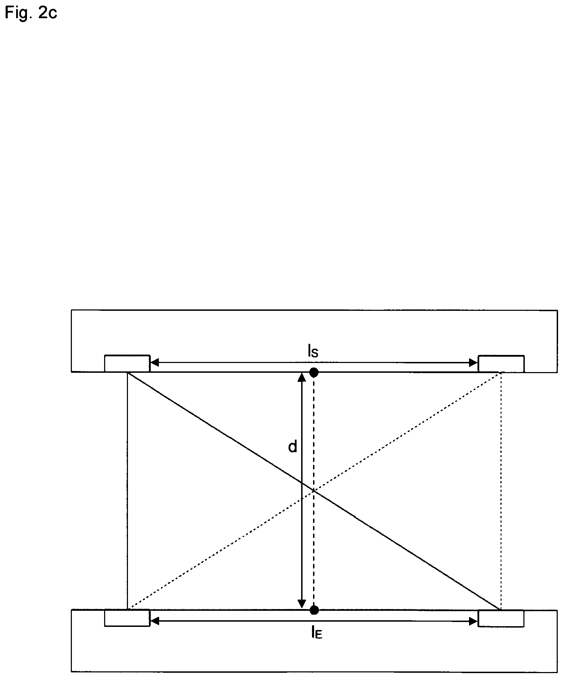

Der Zustand, welcher nach einer entsprechenden Fahrbewegung vorliegt und bei welchem die Ist-Relativposition mit der Soll-Relativpostiion übereinstimmt, ist in Fig. 2c dargestellt. Hierbei liegt lediglich ein Ist-Abstand d vor, welcher unter Berücksichtigung der Geschwindigkeit sowie weiterer Kriterien wie der Beladung der als Anhänger ausgebildeten Fahreinheit 1 zu wählen ist.

Es ist erfindungsgemäß jedoch ebenso möglich, einen beliebigen, von null verschiedenen, Soll-Versatz und Soll-Winkel vorzugeben.

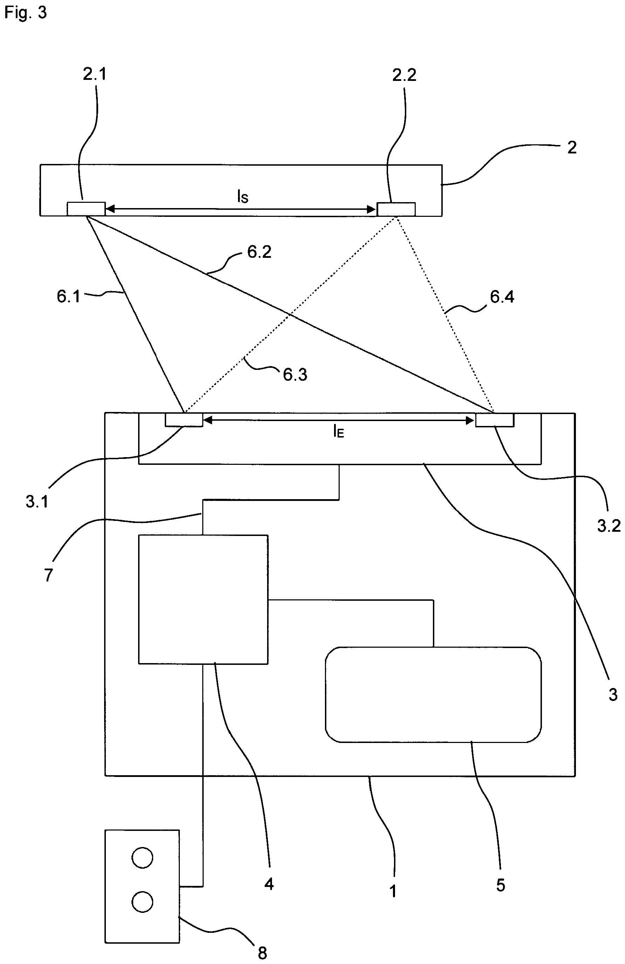

In Fig. 3 wird eine erweiterte Ausführungsform des elektronischen Kopplungssystems dargestellt. Hierbei ist zusätzlich eine tragbare Eingabeeinheit 8, die auch als Modusschalter bezeichnet werden kann, vorhanden, mittels welcher zwischen einem Kopplungszustand und einem Entkopplungszustand umgeschaltet werden kann. Vorliegend ist die Eingabeeinheit 8 mit der Auswertungseinheit 4 drahtlos verbunden.

Nachfolgend wird ein praktischer Anwendungsfall des elektronischen Kopplungssystems in der erweiterten Variante erläutert.

Zu Beginn wird die Sendeeinheit 2 an der Rückseite eines Automobils befestigt. Die Sendeeinheit 2 sendet nun ein Identifikationssignal mittels Modulation des ersten und zweiten Ultraschallsignals aus. Nach Auswertung des Identifikationssignals in der Auswerungseinheit 4 wird die als Anhänger ausgebildete Fahreinheit 1 in den Aktivierungszustand versetzt. Mittels der Eingabeeinheit 8 wird nun von dem Fahrer des Automobils durch Betätigung einer Schaltfläche der Koppelungszustand eingeschaltet. Die Fahreinheit 1 bewegt sich daraufhin in die vorgegebene Soll-Relativposition zwischen Sendeeinheit 2 und Empfangseinheit 3, welche durch einen Soll-Abstand von 100 cm, einen Soll-Versatz von 0 cm und einen Soll-Winkel von 0° bestimmt wird.

Nach Beginn der Fahrt verbleibt die Fahreinheit 1 in der vorgegebenen Soll-Relativposition, wobei mittels der Steuerungsbefehle und der daraus abgeleiteten Fahrbewegungen der Fahreinheit 1 eine fortlaufende Anpassung an die Fahrbewegungen des Automobils stattfindet. Die Steuerungsbefehle werden dabei von der Auswertungsenheit 4 gemäß der zuvor beschriebenen Vorgehensweise bereitgestellt. Von der Auswertungseinheit 4 ist während der Fahrt zudem eine Geschwindigkeitsüberwachung der Fahreinheit 1 durchführbar und ein Abweichungsgrad der Ist-Relativposition von der Soll-Relativposition ermittelbar. Wird die zuvor festgelegte Maximalgeschwindigkeit von 120 km/h oder der zuvor bestimmte Maximalabweichungsgrad überschritten, so wird dies dem Fahrer anhand eines Warnsignals signalisiert. Das Warnsignal wird hierbei von einem in der tragbaren Eingabeeinheit 8 integrierten optischen Signalgeber, der das Warnsignal von der Auswertungseinheit 4 übertragen erhält, sowie zusätzlich akustisch ausgegeben.

Nach Beendigung der Fahrt wird mittels der Eingabeeinheit 8 in den Entkopplungszustand umgeschaltet.

### Verwendete Bezugszeichen

- 1: Fahreinheit
- 2: Sendeeinheit
- 2.1: erster Sender
- 2.2: zweiter Sender
- 3: Empfangseinheit
- 3.1: erster Empfänger
- 3.2: zweiter Empfänger
- 4: Auswertungseinheit
- 5: Antriebseinheit
- 6.1: erste Signalstrecke
- 6.2: zweite Signalstrecke
- 6.3: dritte Signalstrecke
- 6.4: vierte Signalsrecke
- 7: Datenverbindung
- 8: Eingabeeinheit

- Is: Senderabstand
- I_{E}: Empfängerabsatnd
- d: Ist-Abstand
- α: Ist-Winkel
- v: Ist-Versatz

## Patentansprüche

1. Elektronisches Kopplungssystem,
mittels dessen eine Fahreinheit (1) ankoppelbar ist, aufweisend eine Sendeeinheit (2), eine Empfangseinheit (3), eine Auswertungseinheit (4) sowie eine Antriebseinheit (5),
wobei die Sendeeinheit (2) einen ersten und einen zweiten Sender (2.1; 2.2) aufweist, wobei der erste und der zweite Sender (2.1; 2.2) einen Senderabstand aufweisen, wobei die Sendeeinheit (2) ausgerichtet ist, von dem ersten Sender (2.1) ein erstes Ultraschallsignal und von dem zweiten Sender (2.2) ein zweites Ultraschallsignal zu einem ersten und zweiten Sendezeitpunkt auszusenden und wobei das erste und das zweite Ultraschallsignal eine voneinander abweichende Frequenz aufweisen, wobei die Empfangseinheit (3) aus einem ersten und einem zweiten Empfänger (3.1; 3.2) besteht, wobei der erste und der zweite Empfänger (3.1; 3.2) einen Empfängerabstand aufweisen, wobei die Empfangseinheit (3) ausgerichtet ist,von den beiden Empfängern (3.1; 3.2) jeweils beide Ultraschallsignale als insgesamt vier Signalempfänge zu empfangen ,
wobei ein erster Signalempfang einer ersten Signalstrecke (6.1) zwischen dem ersten Sender (2.1) und dem ersten Empfänger (3.1) zugeordnet ist, wobei ein zweiter Signalempfang einer zweiten Signalstrecke (6.2) zwischen dem ersten Sender (2.1) und dem zweiten Empfänger (3.2) zugeordnet ist, wobei ein dritter Signalempfang einer dritten Signalstrecke (6.3) zwischen dem zweiten Sender (2.2) und dem ersten Empfänger (3.1) zugeordnet ist und wobei ein vierter Signalempfang einer vierten Signalstrecke (6.4) zwischen dem zweiten Sender (2.2) und dem zweiten Empfänger (3.3) zugeordnet ist,
wobei die Auswertungseinheit (4) mit der Empfangseinheit (3) datenverbunden ist, wobei die Auswertungseinheit (4) ausgerichtet ist, jedem der vier Signalempfänge ein Empfangszeitpunkt zuzuordnen, das erste und das zweite Ultraschallsignal anhand der Frequenz dem ersten und dem zweiten Sender (2.1; 2.2) zuzuordnen, eine Differenz der Empfangszeitpunkte des ersten und des zweiten Ultraschallsignals im ersten Empfänger (3.1) sowie eine Differenz der Empfangszeitpunkte des ersten und des zweiten Ultraschallsignals im zweiten Empfänger (3.2) zu bestimmen, eine Differenz zwischen dem ersten und zweiten Sendezeitpunkt zu hinterlegen, anhand der Differenz der Empfangszeitpunkte und der Differenz der Sendezeitpunkte die Differenz der Signalstrecken zu ermitteln, anhand der Differenz der Signalstrecken, des Senderabstands und des Empfängerabstands eine Ist-Relativposition zwischen der Sendeeinheit (2) und der Empfangseinheit (3) zu bestimmen, eine Soll-Relativposition zwischen der Sendeeinheit (2) und der Empfangseinheit (3) zu hinterlegen und aus einem Vergleich von der Ist-Relativposition und der Soll-Relativposition einen Steuerungsbefehl bereitzustellen,
wobei die Antriebseinheit (5) eingerichtet ist, den Steuerungsbefehl von der Auswertungseinheit (4) zu erhalten, wobei auf Grundlage des Steuerungsbefehls eine Fahrbewegung der Fahreinheit (1) von der Antriebseinheit (5) bewirkbar ist und wobei mittels der Fahrbewegung die Soll-Relativposition zwischen Sendeeinheit (2) und Empfangseinheit (3) herstellbar ist.

2. Elektronisches Kopplungssystem nach Anspruch 1,
**dadurch gekennzeichnet,**
**dass** die Differenz der Sendezeitpunkte gleich 0 ist.

3. Elektronisches Kopplungssystem nach Anspruch 1 oder 2,
**dadurch gekennzeichnet,**
**dass** das elektronische Kopplungssystem eine Eingabeeinheit (8) aufweist, welche mit der Auswertungseinheit (4) datenverbunden ist und die eingerichtet ist, zwischen einem Kopplungszustand und einem Entkopplungszustand umzuschalten.

4. Elektronisches Kopplungssystem nach Anspruch 3,
**dadurch gekennzeichnet,**
**dass** die Auswertungseinheit (4) eingerichtet ist, bei einem Umschalten von dem Entkopplungszustand in den Kopplungszustand Steuerungsbefehle auszugeben, wobei auf Grundlage der Steuerungsbefehle eine Fahrbewegung der Fahreinheit (1) von der Antriebseinheit (5) bewirkbar ist, wobei mittels der Fahrbewegung die Soll-Relativposition zwischen Sendeeinheit (2) und Empfangseinheit (3) herstellbar ist.

5. Elektronisches Kopplungssystem nach einem der vorherigen Ansprüche,
**dadurch gekennzeichnet,**
**dass** die Auswertungseinheit (4) eingerichtet ist, eine Geschwindigkeitsüberwachung der Fahreinheit (1) durchzuführen und bei einer Überschreitung einer vorbestimmbaren Maximalgeschwindigkeit ein Warnsignal auszugeben.

6. Elektronisches Kopplungssystem nach einem der vorherigen Ansprüche,
**dadurch gekennzeichnet,**
**dass** die Auswertungseinheit (4) eingerichtet ist, ein Abweichungsgrad der Ist-Relativposition von der Soll-Relativposition zu ermitteln und bei einer Überschreitung eines vorbestimmbaren Maximalabweichungsgrads ein Warnsignalauszugeben.

7. Elektronisches Kopplungssystem nach einem der vorherigen Ansprüche,
**dadurch gekennzeichnet,**
**dass** die Auswertungseinheit (4) eingerichtet ist, ein Identifikationssignal auszuwerten und in Abhängigkeit des identifikationssignals zwischen einem Aktivierungszustand und einem Deaktivierungszustand umzuschalten.

8. Elektronisches Kopplungssystem nach Anspruch 7,
**dadurch gekennzeichnet,**
**dass** das Identifikationssignal als Modulation des ersten und/oder zweiten Ultraschallsignals von der Sendeeinheit (2) aussendbar ist.

9. Elektronisches Kopplungssystem nach einem der vorherigen Ansprüche,
**dadurch gekennzeichnet,**
**dass** die Auswertungseinheit (4) eingerichtet ist, eine Laufzeit mindestens eines Ultraschallsignals für mindestens eine Signalstrecke (6) zu erfassen und mittels der Laufzeit eine Absolutlänge einer Signalstrecke (6) zu ermitteln **,** mittels der Absolutlänge die Ist-Relativposition redundant zu ermitteln und mit der anhand der Differenz der Signalstrecken des Senderabstands und des Empfängerabstands zwischen der Sendeeinheit (2) und der Empfangseinheit (3) ermittelten Ist-Relativposition zu vergleichen.

## Claims

1. An electronic coupling system,
by means of which a driving unit (1) can be coupled, comprising a transmitter unit (2), a receiver unit (3), an evaluation unit (4) and a propulsion unit (5),
wherein the transmitter unit (2) has a first and a second transmitter (2.1; 2.2), wherein the first and the second transmitter (2.1; 2.2) are arranged at a transmitter distance, wherein the transmitter unit (2) is designed to transmit a first ultrasonic signal from the first transmitter (2.1) and a second ultrasonic signal from the second transmitter (2.2) at a first and a second transmission time, and wherein the first and the second ultrasonic signal have a frequency which differs from one another, wherein the receiver unit (3) consists of a first and a second receiver (3.1; 3.2), wherein the first and the second receiver (3.1; 3.2) are arranged at a receiver distance, wherein the receiver unit (3) is designed to receive both ultrasonic signals from each of the two receivers (3.1; 3.2) as a total of four signal receptions,
wherein a first signal reception is assigned to a first signal path (6.1) between the first transmitter (2.1) and the first receiver (3.1), wherein a second signal reception is assigned to a second signal path (6.2) between the first transmitter (2.1) and the second receiver (3.2), wherein a third signal reception is assigned to a third signal path (6.3) between the second transmitter (2.2) and the first receiver (3.1), and wherein a fourth signal reception is assigned to a fourth signal path (6.4) between the second transmitter (2.2) and the second receiver (3.3),
wherein the evaluation unit (4) has a data-connection to the receiver unit (3), wherein the evaluation unit (4) is designed to assign a reception time to each of the four signal receptions, to assign the first and the second ultrasonic signal to the first and the second transmitter (2.1; 2.) on the basis of the frequency, to determine a difference between the reception times of the first and the second ultrasonic signal in the first receiver (3.1) and a difference between the reception times of the first and the second ultrasonic signal in the second receiver (3.2), to store a difference between the first and the second transmission time, to determine the difference between the signal paths on the basis of the difference between the reception times and the difference between the transmission times, to determine an actual relative position between the transmitter unit (2) and the receiver unit (3) on the basis of the difference between the signal paths, the transmitter distance and the receiver distance, to store a desired relative position between the transmitter unit (2) and the receiver unit (3), and to provide a control command from a comparison of the actual relative position and the desired relative position, wherein the propulsion unit (5) is designed to receive the control command from the evaluation unit (4), wherein a driving movement of the driving unit (1) can be effectuated by the propulsion unit (5) on the basis of the control command, and wherein the desired relative position between the transmitter unit (2) and the receiver unit (3) can be established by means of the driving movement.

2. The electronic coupling system according to claim 1,
**characterized in**
**that** the difference of the transmission times is equal to 0.

3. The electronic coupling system according to claim 1 or 2,
**characterized in**
**that** the electronic coupling system comprises an input unit (8) which has a data connection to the evaluation unit (4) and which is designed to switch-over between a coupling state and a decoupling state.

4. The electronic coupling system according to claim 3,
**characterized in**
**that** the evaluation unit (4) is designed to output control commands during the switch-over from the decoupling state to the coupling state, wherein a driving movement of the driving unit (1) can be effectuated by the propulsion unit (5) on the basis of the control commands, wherein the desired relative position between the transmitter unit (2) and the receiver unit (3) can be established by means of the driving movement.

5. The electronic coupling system according to any one of the preceding claims,
**characterized in**
**that** the evaluation unit (4) is designed to monitor the speed of the driving unit (1) and to output a warning signal if a predeterminable maximum speed is exceeded.

6. The electronic coupling system according to any one of the preceding claims,
**characterized in**
**that** the evaluation unit (4) is designed to determine a degree of deviation of the actual relative position from the desired relative position and to output a warning signal if a predeterminable maximum degree of deviation is exceeded.

7. The electronic coupling system according to one of the preceding claims,
**characterized In**
**that** the evaluation unit (4) is designed to evaluate an identification signal and, depending on the identification signal, to switch over from an activation state to a deactivation state.

8. The electronic coupling system according to claim 7,
**characterized in**
**that** the identification signal can be emitted as a modulation of the first and/or the second ultrasonic signal by the transmitter unit (2).

9. The electronic coupling system according to one of the preceding clai ms,
**characterized in**
**that** the evaluation unit (4) is designed to record a propagation time of at least one ultrasonic signal for at least one signal path (6) and to determine an absolute length of a signal path (6) by means of the propagation time, to determine the actual relative position redundantly by means of the absolute length and to compare it with the actual relative position determined on the basis of the difference of the signal paths, the transmitter distance and the receiver distance between the transmitter unit (2) and the receiver unit (3).

## Revendications

1. Système de couplage électronique,
au moyen duquel une unité de déplacement (1) peut être couplée, comprenant une unité d'émission (2), une unité de réception (3), une unité d'évaluation (4) ainsi qu'une unité d'entraînement (5),
l'unité d'émission (2) comprenant un premier et un deuxième émetteur (2.1; 2.2), le premier et le deuxième émetteur (2.1; 2.2) présentant un espacement entre émetteurs, l'unité d'émission (2) étant orientée, un premier signal ultrasonore pouvant être émis par le premier émetteur (2.1) et un deuxième signal ultrasonore pouvant être émis par le deuxième émetteur (2.2) à un premier et un deuxième instant d'émission et le premier et le deuxième signal ultrasonore présentant des fréquences différentes l'une de l'autre,
l'unité de réception (3) comprenant un premier et un deuxième récepteur (3.1; 3.2), le premier et le deuxième récepteur (3.1; 3.2) présentant un espacement entre récepteurs, l'unité de réception (3) étant orientée pour recevoir les deux signaux ultrasonores par les deux récepteurs (3.1; 3.2) respectivement en tant que quatre réceptions de signaux en tout, une première réception de signal étant associée à un premier trajet de signaux (6.1) entre le premier émetteur (2.1) et le premier récepteur (3.1), une deuxième réception de signal étant associée à un deuxième trajet de signaux (6.2) entre le premier émetteur (2.1) et le deuxième récepteur (3.2), une troisième réception de signal étant associée à un troisième trajet de signaux (6.3) entre le deuxième émetteur (2.2) et le premier récepteur (3.1) et une quatrième réception de signal est associée à un quatrième trajet de signaux (6.4) entre le deuxième émetteur (2.2) et le deuxième récepteur (3.3),
l'unité d'évaluation (4) étant reliée par liaison de données à l'unité de réception (3), l'unité d'évaluation (4) étant orientée pour associer un instant de réception à chacune des quatre réceptions de signaux, pour attribuer le premier et le deuxième signal ultrasonore au premier et au deuxième émetteur (2.1; 2.2) à l'aide de la fréquence, pour déterminer une différence entre les instants de réception des premier et deuxième signaux ultrasonores dans le premier récepteur (3.1) ainsi qu'une différence entre les instants de réception des premier et deuxième signaux ultrasonores dans le deuxième récepteur (3.2), pour enregistrer une différence entre le premier et le deuxième instant d'émission, pour déterminer la différence des trajets de signaux à l'aide de la différence des instants de réception et de la différence des instants d'émission, pour déterminer une position relative réelle entre l'unité d'émission (2) et l'unité de réception (3) sur la base de la différence des trajets de signaux, de l'espacement entre émetteurs et de l'espacement entre récepteurs, pour enregistrer une position relative de consigne entre l'unité d'émission (2) et l'unité de réception (3) et pour fournir une instruction de commande à partir d'une comparaison entre la position relative réelle et la position relative de consigne,
l'unité d'entraînement (5) étant conçue pour obtenir l'instruction de commande de l'unité d'évaluation (4), un déplacement de l'unité de déplacement (1) pouvant être provoqué par l'unité d'entraînement (5) sur la base de l'instruction de commande et la position relative de consigne entre l'unité d'émission (2) et l'unité de réception (3) pouvant être produite au moyen du déplacement.

2. Système de couplage électronique suivant la revendication 1,
est **caractérisé en ce**
**que** la différence entre les moments d'émission est égale à 0.

3. Système de couplage électronique suivant les revendications 1 ou 2
est **caractérisé en ce**
**que** le système de couplage électronique présente une unité d'entrée (8) qui est reliée par liaison de données à l'unité d'évaluation (4) et qui est conçue pour commuter entre un état de couplage et un état de découplage.

4. Système de couplage électronique suivant la revendication 3,
est **caractérisé en ce**
**que** l'unité d'évaluation (4) étant conçue pour émettre des instructions de commande lors du passage de l'état de découplage à l'état de couplage, un déplacement de l'unité de déplacement (1) pouvant être provoqué par l'unité d'entraînement (5) sur la base des instructions de commande, la position relative de consigne entre l'unité d'émission (2) et l'unité de réception (3) pouvant être produite au moyen du déplacement.

5. Système de couplage électronique suivant une des revendications précédentes,
est **caractérisé en ce**
**que** l'unité d'évaluation (4) étant conçue pour surveiller la vitesse de l'unité de déplacement (1) et d'émettre un signal d'avertissement en cas de dépassement d'une vitesse maximale prédéterminable.

6. Système de couplage électronique suivant une des revendications précédentes,
est **caractérisé en ce**
**que** l'unité d'évaluation (4) étant conçue pour déterminer un degré d'écart entre la position relative réelle et la position relative de consigne et d'émettre un signal d'avertissement en cas de dépassement d'un degré d'écart maximal.

7. Système de couplage électronique suivant une des revendications précédentes,
est **caractérisé en ce**
**que** l'unité d'évaluation (4) étant conçue pour évaluer un signal d'identification et de commuter entre un état d'activation et un état de désactivation en fonction du signal d'identification.

8. Système de couplage électronique suivant la revendication 7,
est **caractérisé en ce**
**que** le signal d'identification peut être émis sous forme de modulation du premier et/ou du deuxième signal ultrasonore par l'unité d'émission (2).

9. Système de couplage électronique suivant une des revendications précédentes,
est **caractérisé en ce**
**que** l'unité d'évaluation (4) étant conçue pour détecter une durée d'au moins un signal ultrasonore pour au moins un trajet de signal (6) et déterminer au moyen du temps de propagation une longueur absolue d'un trajet de signaux (6), déterminer de manière redondante la position relative réelle au moyen de la longueur absolue et la comparer à la position relative réelle déterminée à l'aide de la différence des trajets de signaux, de la distance d'émission et de la distance de réception entre l'unité d'émission (2) et l'unité de réception (3).
